# EUROPÄISCHE PATENTSCHRIFT

(11) **EP 3 545 216 B1**
(45) Veröffentlichungstag und Bekanntmachung des Hinweises auf die Patenterteilung: **02.09.2020**
(21) Anmeldenummer: 17787423.7
(22) Anmeldetag: 24.10.2017
(51) Int. Cl.: F16H 63/34

(54) **ENTSPERRVORRICHTUNG ZUM ENTSPERREN EINER PARKSPERRE EINES FAHRZEUGS UND VERFAHREN ZUM BETREIBEN EINER ENTSPERRVORRICHTUNG**
UNLOCKING DEVICE FOR UNLOCKING A PARK LOCK OF A VEHICLE AND METHOD FOR OPERATING AN UNLOCKING DEVICE
DISPOSITIF DE DÉVERROUILLAGE DESTINÉ À DÉVERROUILLER UN FREIN DE STATIONNEMENT D'UN VÉHICULE ET PROCÉDÉ PERMETTANT DE FAIRE FONCTIONNER UN DISPOSITIF DE DÉVERROUILLAGE

(30) Priorität: 28.11.2016 DE 102016223560
(43) Veröffentlichungstag der Anmeldung: 02.10.2019
(73) Patentinhaber: ZF Friedrichshafen AG, 88046 Friedrichshafen (DE)
(72) Erfinder: SPRATTE, Joachim, 49090 Osnabrueck (DE); AUMANN, Torsten, 49406 Drentwede (DE)
(74) Vertreter: ZF Friedrichshafen AG
(86) Internationale Anmeldenummer: PCT/EP2017/077046
(87) Internationale Veröffentlichungsnummer: WO 2018/095673

(56) Entgegenhaltungen:
- EP-A1- 1 342 632
- WO-A1-2016/045867
- WO-A1-2017/189508
- DE-A1-102012 012 673
- FR-A1- 2 964 925
- JP-A- 2008 128 470

## Beschreibung

Die vorliegende Erfindung bezieht sich auf eine Entsperrvorrichtung zum Entsperren einer Parksperre eines Fahrzeugs und ein Verfahren zum Betreiben einer Entsperrvorrichtung.

Eine gattunsgemäße Entsperrvorrichtung ist aus der FR-A1-2964925 bekannt.

Steht bei Automatikgetrieben eines Fahrzeugs ein Gangwahlhebel auf "P", ist eine Parksperre eingerastet und verhindert ein Wegrollen des Fahrzeuges. Die Parksperre kann über einen Seilzug vom Gangwahlhebel angesteuert werden. Bei einigen Automatikgetrieben erfolgt das Ein- und Auslegen über eine interne hydraulische Vorsteuerung. Bei einigen Getrieben erfolgt das Betätigen auch über Elektromotoren. Bei diesen aktuiert ein Elektromotor über ein Getriebe die Parksperre und sichert bzw. entsichert so das Fahrzeug gegen Wegrollen.

Vor diesem Hintergrund schafft die vorliegende Erfindung eine verbesserte Entsperrvorrichtung zum Entsperren einer Parksperre eines Fahrzeugs und ein verbessertes Verfahren zum Betreiben einer Entsperrvorrichtung gemäß den Hauptansprüchen. Vorteilhafte Ausgestaltungen ergeben sich aus den Unteransprüchen und der nachfolgenden Beschreibung.

Gemäß der vorliegenden Erfindung umfasst eine Entsperrvorrichtung zum Entsperren einer Parksperre eines Fahrzeugs zumindest eine Exzentereinrichtung, eine Schiebereinheit und eine Betätigungseinrichtung. Die Exzentereinrichtung ist dazu ausgeformt, um in einer zumindest teilweise in der Schiebereinheit aufgenommenen ersten Position die Schiebereinheit in einer Sperrposition zu halten, in der die Parksperre gesperrt oder eingelegt ist und in einer zweiten Position ein Übersetzen der Schiebereinheit in eine Entsperrposition zu ermöglichen, in der die Parksperre entsperrt oder ausgelegt ist. Hierbei kann die Schiebereinheit in der zweiten Position weiterhin zumindest teilweise in der Schiebereinheit aufgenommenen sein oder nicht mehr in der Schiebereinheit aufgenommen sein. Die Schiebereinheit ist über ein Übertraqungselement, insbesondere einen Seilzug, mit der Parksperre gekoppelt oder koppelbar und dazu ausgeformt, um in der Sperrposition das Übetragungselement in einer Parksperrposition zu positionieren, um die Parksperre zu sperren und in der Entsperrposition das Übetragugnselement in einer Parkentsperrposition zu positionieren, um die Parksperre zu entsperren. Die Betätigungseinrichtung ist dazu ausgebildet, um ansprechend auf eine Betätigung der Betätigungseinrichtung die Exzentereinrichtung von der ersten Position in die zweite Position zu bewegen. Hierzu kann die Betätigungseinrichtung beispielsweise am Gangwahlhebel oder im Bereich des Gangwahlhebels des Fahrzeugs angeordnet sein, da die Betätigungseinrichtung hier für einen Benutzer gut zugänglich ist.

Eine hier vorgestellte Entsperrvorrichtung ermöglicht es, mit nur einem in einer Schalteinrichtung des Fahrzeugs bereits vorhandenen Übertragungselementes wie beispielsweise einem Seilzug, die Parksperre stromlos und von Hand zu entsperren. Dies kann von Vorteil sein, wenn ein defektes Fahrzeug von einer Parkposition entfernt werden soll.

Ein in die Schiebereinheit aufgenommener Abschnitt der Exzentereinrichtung ist gemäß der vorliegenden Erfindung dazu ausgeformt, um ansprechend auf die Betätigung der Betätigungseinrichtung eine Linearbewegung entlang einer Exzenterachseneinrichtung der Exzentereinrichtung, die sich senkrecht zu einer Ebene des Abschnitts erstreckt, auszuführen. So kann der Abschnitt entlang der Exzenterachseneinrichtung von der ersten Position in die zweite Position bewegt werden. Hierbei kann der Abschnitt in der ersten Position der Exzentereinrichtung in einer Durchgangsöffnung der Schiebereinheit aufgenommen sein und in der zweiten Position der Exzentereinrichtung aus der Durchgangsöffnung teilweise herausbewegt worden sein oder aber auch komplett aus der Durchgangsöffnung herausbewegt worden sein.

Gemäß einer Ausführungsform kann der Abschnitt der Exzentereinrichtung ein Versatzelement aufweisen, das dazu ausgeformt ist, um ansprechend auf die Linearbewegung der Exzentereinrichtung eine senkrecht zu der Linearbewegung verlaufende Seitwärtsbewegung der Schiebereinheit zu begrenzen, wenn die Exzentereinrichtung gemäß einer Ausführungsform auch in der zweiten Position zumindest teilweise in der Schiebereinheit angeordnet ist. Das Versatzelement kann hierbei vorteilhafterweise eine stufenförmige Erhöhung des Abschnitts ausformen, die dazu ausgeformt ist, um in der zweiten Position der Exzentereinrichtung die Seitwärtsbewegung der Schiebereinheit formschlüssig zu begrenzen. So kann die Schiebereinheit in der zweiten Position der Exzentereinrichtung an dem Versatzelement anliegend angeordnet sein.

Zum Begrenzen des Bewegens der Exzentereinrichtung, z. B. der Linearbewegung, kann die Exzentereinrichtung, beispielsweise die Exzenterachseneinrichtung zumindest eine Druckfeder aufweisen, die in der ersten Position der Exzentereinrichtung entspannt ist und die angeordnet ist, um ansprechend auf die Betätigung durch zumindest eine Komponente der Exzentereinrichtung, beispielsweise durch den Abschnitt, gespannt zu werden. Eine solche Druckfeder kann zudem ein erleichtertes Bewegen der Komponente von der zweiten Position zurück in die erste Position ermöglichen.

Die Entsperrvorrichtung kann gemäß einer vorteilhaften Ausführungsform eine Übersetzungseinrichtung aufweisen, die dazu ausgebildet, ist, um die Schiebereinheit von der Sperrposition in die Entsperrposition zu übersetzen. Die Übersetzungseinrichtung kann hierbei ein schonendes Übersetzen der Schiebereinheit von der Sperrposition in die Entsperrposition ermöglichen, bei dem beispielsweise ein Verschleiß des Versatzelements verhindert werden kann. Hierzu weist die Übersetzungseinrichtung zumindest eine Unterstützungsfeder auf, die angeordnet ist, um in der Sperrposition der Schiebereinheit eine Vorspannung auf die Schiebereinheit und/oder eine Hebeleinrichtung der Übersetzungseinrichtung auszuüben, wobei die Unterstützungsfeder angeordnet ist, um ansprechend auf das Bewegen der Exzentereinrichtung in die zweite Position, die Vorspannung freizugeben, um ein Überführen der Schiebereinheit in die Entsperrposition zu ermöglichen.

Von Vorteil ist es weiterhin, wenn die Übersetzungseinrichtung zudem zumindest die Hebeleinrichtung aufweist, die dazu ausgeformt sein kann, um ansprechend auf ein Freigeben der Vorspannung der Unterstützungsfeder umgelegt zu werden, um die Schiebereinheit schonend in die Entsperrposition zu schieben.

Um das Übersetzen der Schiebereinheit von der Sperrposition in die Entsperrposition zu verhindern, solange die Exzentereinrichtung in der ersten Position angeordnet ist, kann die Übersetzungseinrichtung zumindest eine Hakeneinrichtung mit zumindest einem Haken aufweisen, der in der ersten Position der Exzentereinrichtung derart mit der Hebeleinrichtung gekoppelt ist, dass ein Umlegen der Hebeleinrichtung formschlüssig verhindert wird. Weiterhin kann die Hakeneinrichtung angeordnet sein, um durch das Bewegen der Exzentereinrichtung in die zweite Position durch die Exzentereinrichtung, beispielsweise durch den Abschnitt, derart ausgelenkt zu werden, dass der Haken die Hebeleinrichtung freigibt und die Hebeleinrichtung angetrieben durch die Unterstützungsfeder umgelegt wird.

Gemäß einer Ausführungsform kann die Entsperrvorrichtung eine Sensoreinrichtung aufweisen, die zumindest eine an der Exzentereinrichtung angeordnete Exzentersensoreinrichtung und/oder eine an der Schiebereinheit angeordnete Schiebersensoreinrichtung aufweist. Die Sensoreinrichtung kann vorteilhafterweise dazu ausgebildet ist, um zumindest eine in der Schiebereinheit aufgenommene oder im Bereich der Schiebereinheit angeordnete Stellung der Exzentereinrichtung zu erkennen. Hierbei kann die Stellung die zweite Position der Exzentereinrichtung repräsentieren. So kann die Sensoreinrichtung dazu ausgeformt sein, um zumindest zu erkennen, ob die Parksperre entsperrt ist.

Hierbei kann die Sensoreinrichtung dazu ausgebildet sein, um eine Exzentersensorposition eines Exzentersensors der Exzentersensoreinrichtung und/oder eine Schiebersensorposition eines Schiebersensors der Schiebersensoreinrichtung zu vergleichen, um die Stellung zu erkennen. Dies kann beispielsweise dann ermöglicht sein, wenn die Exzentersensorposition einer Schiebersensorposition zugeordnet ist, insbesondere wobei die Stellung erkannt werden kann, wenn die Exzentersensorposition nicht in einem vorgestimmten Verhältnis zu der zugeordneten Schiebersensorposition angeordnet ist. Hierbei kann beispielsweise eine Exzentersensorposition R1 einer Schiebersensorposition R zugeordnet sein, die einer Gangwahlhebelposition eines Gangwahlhebels des Fahrzeugs in einem Gang R entspricht. Hierbei kann die Exzentersensorposition R1 im Bereich der ersten Position der Exzentereinheit angeordnet sein. Die Exzentersensorposition ist demnach nicht in dem vorbestimmten Verhältnis zu der Schiebersensorposition angeordnet, wenn die Exzentereinrichtung in die zweite Position bewegt wurde. So kann schnell und einfach erkannt werden, dass die Parksperre durch die Entsperrvorrichtung entsperrt ist.

Die Exzentersensoreinrichtung kann eine Mehrzahl von Exzentersensoren aufweisen, die bogenförmig, beispielsweise auf dem Abschnitt, angeordnet sind und/oder die Schiebersensoreinrichtung kann eine Mehrzahl von Schiebersensoren aufweisen, die linear angeordnet sind. Unter einer bogenförmigen Anordnung der Exzentersensoren kann eine Anordnung der Exzentersensoren verstanden werden, bei der ein an einem Exzenter angeordnetes Elemente bei einer Drehung des Exzenters die Exzentersensoren überstreicht. So können weitere typische Exzentersensorpositionen Schiebersensorpositionen zugeordnet werden, die beispielsweise weitere typische Schaltgetriebeeinstellungen wie z. B. P repräsentieren können.

Um einem Verschleiß der Sensoreinrichtung entgegenzuwirken, ist es von Vorteil, wenn zumindest ein Exzentersensor der Exzentersensoreinrichtung und/oder ein Schiebersensor der Schiebersensoreinrichtung zumindest teilweise als ein Magnetsensor ausgeformt ist. Zum Erkennen zumindest der einen zugeordneten Position kann die Exzentereinrichtung und/oder die Schiebereinheit zumindest einen Magneten aufweisen.

Von Vorteil ist es weiterhin, wenn die Entsperrvorrichtung zumindest ein beispielsweise an oder in einem Gehäuse der Entsperrvorrichtung angeordnetes Dämpfungselement aufweist, das dazu ausgebildet ist, um beim Entsperren der Parksperre zumindest ein Geräusch der Entsperrvorrichtung akustisch zu dämpfen. Hierzu kann das Dämpfungselement zumindest eine Öffnung aufweisen, die dazu ausgeformt ist, um einen Dom einer Adaptereinrichtung aufzunehmen, an die die Entsperrvorrichtung fixiert werden soll. Zum Fixieren der Entsperrvorrichtung an der Adaptereinrichtung kann das Dämpfungselement zumindest eine selbstschneidende Schraube aufweist, die dazu ausgeformt ist, um in den Dom der Adaptereinrichtung eingeschraubt zu werden, wenn das Dämpfungselement von dem Dom aufgenommen ist.

Ein Verfahren zum Betreiben einer der vorgestellten Entsperrvorrichtungen umfasst zumindest die folgenden Schritte:
- Bewegen der Exzentereinrichtung von der ersten Position in die zweite Position ansprechend auf das Betätigen der Betätigungseinrichtung; und
- Übersetzen der Schiebereinheit von der Sperrposition in die Entsperrposition ansprechend auf den Schritt des Bewegens, um die Parksperre zu entsperren.

Auch durch das hier vorgestellte Verfahren können die dem Ansatz zugrunde liegenden Vorteile der Entsperrvorrichtung schnell und technisch einfach umgesetzt werden.
Fig. 1 eine schematische Darstellung eines Fahrzeugs mit einer Entsperrvorrichtung gemäß einem Ausführungsbeispiel;
Fig. 2 eine perspektivische Ansicht einer Entsperrvorrichtung gemäß einem Ausführungsbeispiel;
Fig. 3 eine schematische Aufsicht auf eine Entsperrvorrichtung gemäß einem Ausführungsbeispiel;
Fig. 4 eine seitliche Querschnittdarstellung einer Entsperrvorrichtung gemäß einem Ausführungsbeispiel;
Fig. 5 eine schematische Querschnittdarstellung einer Schalteinrichtung mit einer Entsperrvorrichtung gemäß einem Ausführungsbeispiel;
Fig. 6 eine Aufsicht auf eine Entsperrvorrichtung gemäß einem Ausführungsbeispiel;
Fig. 7 eine Aufsicht auf eine Entsperrvorrichtung gemäß einem Ausführungsbeispiel;
Fig. 8 eine seitliche Querschnittdarstellung einer Entsperrvorrichtung gemäß einem Ausführungsbeispiel;
Fig. 9 eine Aufsicht auf eine Entsperrvorrichtung gemäß einem Ausführungsbeispiel;
Fig. 10 eine seitliche Querschnittdarstellung einer Entsperrvorrichtung gemäß einem Ausführungsbeispiel;
Fig. 11 eine perspektivische Darstellung einer Exzentereinrichtung mit einem Versatzelement gemäß einem Ausführungsbeispiel;
Fig. 12 eine perspektivische Aufsicht auf eine Hakeneinrichtung gemäß einem Ausführungsbeispiel;
Fig. 13 eine Aufsicht auf eine Entsperrvorrichtung mit einer Sensoreinrichtung gemäß einem Ausführungsbeispiel;
Fig. 14 eine Darstellung einer Verschaltung von Sensoren gemäß einem Ausführungsbeispiel;
Fig. 15 eine perspektivische Ansicht eines Dämpfungselements gemäß einem Ausführungsbeispiel;
Fig. 16 eine seitliche Querschnittsdarstellung eines Dämpfungselements gemäß einem Ausführungsbeispiel; und
Fig. 17 ein Ablaufdiagramm eines Verfahrens zum Betreiben einer Entsperrvorrichtung gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

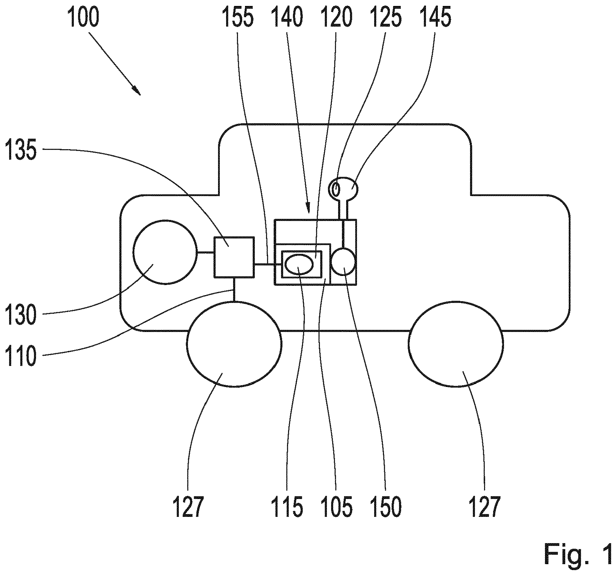

Figur 1 zeigt eine schematische Darstellung eines Fahrzeugs 100 mit einer Entsperrvorrichtung 105 gemäß einem Ausführungsbeispiel. Die Entsperrvorrichtung 105 ist dazu ausgebildet, um eine Parksperre 110 eines Fahrzeugs zu entsperren. Hierzu umfasst die Entsperrvorrichtung 105 zumindest eine Exzentereinrichtung 115, eine Schiebereinheit 120 und eine Betätigungseinrichtung 125.

Das Fahrzeug 100 weist außer der Entsperrvorrichtung 105 und der Parksperre 110 gemäß diesem Ausführungsbeispiel weiterhin zumindest eine Mehrzahl von Rädern 127, einen Motor 130, ein Fahrzeuggetriebe 135, das gemäß diesem Ausführungsbeispiel als ein Automatikgetriebe ausgeformt ist, und eine Schalteinrichtung 140 mit einem Gangwahlhebel 145 auf. Gemäß diesem Ausführungsbeispiel ist die Entsperrvorrichtung 105 Teil der Schalteinrichtung 140, wobei die Exzentereinrichtung 115 und die Schiebereinheit 120 der Entsperrvorrichtung 105 in einem Innenraum der Schalteinrichtung 140 aufgenommen sind und die Betätigungseinrichtung 125 an dem Gangwahlhebel 145 der Schalteinrichtung 140 angeordnet ist, um für einen sich in dem Fahrzeug 100 befindenden Fahrer des Fahrzeugs 100 zugänglich zu sein. In dem Innenraum der Schalteinrichtung 140 ist gemäß diesem Ausführungsbeispiel zudem ein Schalteinrichtungsmotor 150 angeordnet. Die Schiebereinheit 120 der Entsperrvorrichtung 105 ist über ein Übertragungselement 155 wie beispielsweise einen Seilzug und das Fahrzeuggetriebe 135 mit der Parksperre 110 gekoppelt.

Die Exzentereinrichtung 115 ist dazu ausgeformt, um in einer zumindest teilweise in der Schiebereinheit 120 aufgenommenen ersten Position die Schiebereinheit 120 in einer Sperrposition zu halten, in der die Parksperre 110 gesperrt ist und in einer zweiten Position ein Übersetzen der Schiebereinheit 120 in eine Entsperrposition zu ermöglichen, in der die Parksperre 110 entsperrt ist. Die Schiebereinheit 120 ist über das Übertragungselement 155 bzw. den Seilzug mit der Parksperre 110 gekoppelt und dazu ausgeformt, um in der Sperrposition das Übertragungselement 155 bzw. den Seilzug in einer Parksperrposition zu positionieren, um die Parksperre 110 zu sperren oder einzulegen und in der Entsperrposition das Übertragungselement bzw. den Seilzug 155 in einer Parkentsperrposition zu positionieren, um die Parksperre 110 zu entsperren oder auszulegen. Die Betätigungseinrichtung 125 ist dazu ausgebildet, um ansprechend auf eine Betätigung die Exzentereinrichtung 115 von der ersten Position in die zweite Position zu bewegen.

Im Folgenden wird der hier beschriebene Ansatz noch einmal detaillierter ausgeführt:
Bei zunehmend automatisierten Fahrfunktionen und elektrifizierten Fahrzeugen 100 werden sich elektrisch aktuierte Parksperren 110 durchsetzen. Schaltbetätigungen zur Gangwahl von Fahrzeuggetrieben 135, zuvor als Gangwahlhebel 145 bezeichnet, befinden sich im Innenraum des Fahrzeugs 100. Bei Gangwahlhebeln 145 gibt es verschiedene Varianten:
Bei manuellen Schaltbetätigungen wird sowohl die Gangwahl, wie auch das Ein- und Auslegen der Parksperre 110 mechanisch über ein oder mehrere Übertragungselemente 155 wie Gestänge oder Seilzüge realisiert. In der weiteren Beschreibung wird der hier vorgestellte Ansatz unter Verwendung eines Seilzugs als Übertragungselement 155 beschrieben, obgleich es für den Fachmann zweifelsfrei ersichtlich ist, dass auch ein alternatives Übertragungselement wie beispielsweise ein Gestänge als Übertragungselement 155 verwendet werden kann. Schaltbetätigungen mit elektronischer Erfassung der Wählhebelposition des Gangwahlhebels 145 und mechanischer Betätigung der Parksperre 110 dagegen sind sehr gebräuchlich. Zuletzt gibt es noch vollelektronische Wählbetätigungen, die zunehmend in modernen Fahrzeugen 100 zu finden sind. Hier werden sowohl eine Positionserfassung, wie auch ein Fahrerwunsch zur Betätigung der Parksperre 110 elektronisch zum Fahrzeuggetriebe 135, bzw. zur Entsperrvorrichtung 105, die auch als Parksperrenaktuator bezeichnet werden kann, übertragen.

Bei Fahrzeugen 100, bei denen verschiedene, der o.g. Schaltbetätigungskonzepte zum Einsatz kommen, ist es erforderlich, eine Modularität auch bei der Entsperrvorrichtung 105 darzustellen. Für die Entsperrvorrichtung 105 gibt es verschiedene potenzielle Verbauorte wie z. B. am Fahrzeuggetriebe 135, im Motorraum oder, wie hier dargestellt, unterhalb des im Innenraum des Fahrzeugs 100 angeordneten Gangwahlhebels 145. Gemäß diesem Ausführungsbeispiel erfolgt dann eine Betätigung der Parksperre 110 über den Seilzug 135. Gemäß einem alternativen Ausführungsbeispiel kann die Betätigung der Parksperre 110 auch über ein Gestänge erfolgen. Für den Fall, dass das Fahrzeug 100 nach einem Defekt abgeschleppt werden muss, ist es bei allen oben aufgeführten Konzepten aber erforderlich, die Parksperre 110 stromlos und von Hand entriegeln zu können. Um für den Fall einer Notentriegelung des Fahrzeuges 100 das Fahrzeug 100 noch über die Bremse sichern zu können, erfolgt eine Bedienung der Entsperrvorrichtung 105, die auch als Notentriegelung bezeichnet werden kann, gemäß diesem Ausführungsbeispiel aus dem Innenraum des Fahrzeugs 100 durch das Betätigen der Betätigungseinrichtung 125. Hierzu wird bei bekannten Fahrzeugen ein zusätzlicher Seilzug vom Fahrzeuggetriebe in den Innenraum des Fahrzeugs verlegt, an den dann ein Entriegelungsmechanismus angeschlossen ist.

Anders als bei bekannten Entsperrvorrichtungen, bei denen eine Notentriegelung separat in den Innenraum verlegt ist, wird bei der hier vorgestellten Entsperrvorrichtung 105 vorteilhafterweise nur ein einziger Seilzug 155 benötigt. Ein Betätigen der Entsperrvorrichtung 105 überträgt Schwingungen und Geräusche vom Fahrzeuggetriebe 135 über den Seilzug 155 in den Innenraum des Fahrzeugs 100, die störend wahrgenommen werden können. Da die hier beschriebene Entkopplungsvorrichtung 105 lediglich einen Seilzug 155 aufweist, müssen diese Schwingungen und Geräusche vorteilhafterweise nur einmal entkoppelt werden.

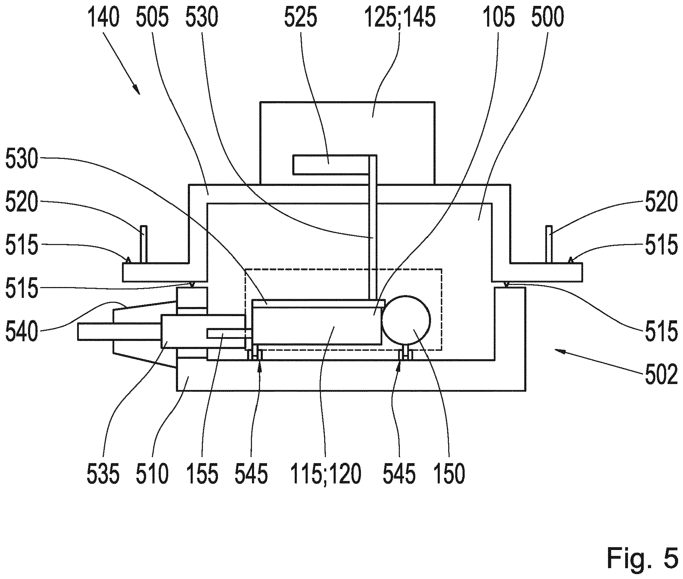

Gemäß diesem Ausführungsbeispiel ist die Entsperrvorrichtung 105 unterhalb des Gangwahlhebels 145 im Fahrzeug 100 verbaut. Die Verbindung zum Fahrzeuggetriebe 135 und somit zur Parksperre 110 erfolgt über den Seilzug 155. Die Seilzuganbindung und die Entsperrvorrichtung 105 sind zusammen akustisch entkoppelt, siehe hierzu Fig. 5, 15 und 16. Eine Übertragung der in der Entsperrvorrichtung 105 durch den Schalteinrichtungsmotor 150 erzeugten rotatorischen Bewegung in die translatorische Bewegung des Seilzuges 155 erfolgt durch die Exzentereinrichtung 115. Anders ausgedrückt wird mittels der Exzentereinrichtung 115 eine rotatorische Bewegung des Getriebes des Schalteinrichtungsmotors 150 in eine lineare Bewegung der Schiebereinheit 120 umgesetzt, die auch als Seilzugschieber bezeichnet werden kann.

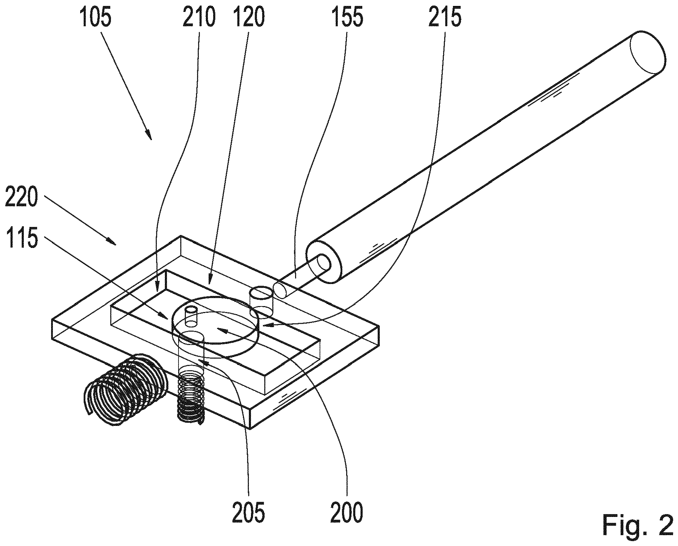

Figur 2 zeigt eine perspektivische Ansicht einer Entsperrvorrichtung 105 gemäß einem Ausführungsbeispiel. Dabei kann es sich um die anhand von Fig. 1 beschriebene Entsperrvorrichtung 105 handeln. Die zu der Entsperrvorrichtung 105 gehörende in Fig. 1 beschriebene Betätigungseinrichtung ist gemäß diesem Ausführungsbeispiel nicht dargestellt.

Gemäß diesem Ausführungsbeispiel weist die Exzentereinrichtung 115 einen kreisförmigen Abschnitt 200 und eine Exzenterachseneinrichtung 205 auf, die sich senkrecht zu einer Ebene des Abschnitts 200 erstreckt. Die Schiebereinheit 120 ist gemäß diesem Ausführungsbeispiel rechteckig ausgeformt und weist im Wesentlichen in einer Mitte eine rechteckige Durchgangsöffnung 210 auf, die auch als Kulissenöffnung bezeichnet werden kann. Der Abschnitt 200 ist gemäß diesem Ausführungsbeispiel in der hier dargestellten ersten Position 215 der Exzentereinrichtung 115 vollständig in der Schiebereinheit 120, gemäß diesem Ausführungsbeispiel in der Durchgangsöffnung 210 der Schiebereinheit 120, aufgenommen. Die Schiebereinheit 120 ist demnach in der Sperrposition 220 angeordnet.

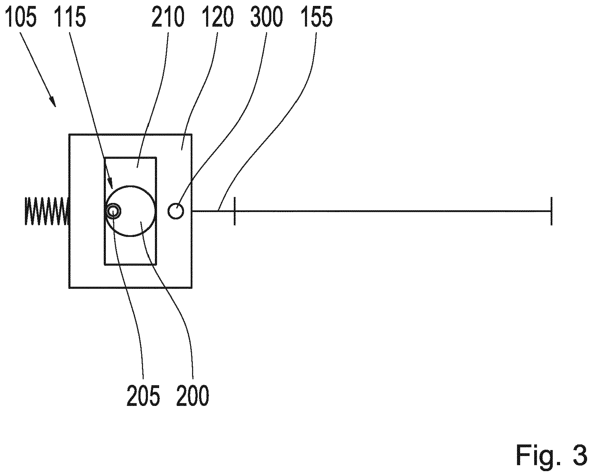

Figur 3 zeigt eine schematische Aufsicht auf eine Entsperrvorrichtung 105 gemäß einem Ausführungsbeispiel. Dabei kann es sich um die anhand von Fig. 2 beschriebene Entsperrvorrichtung 105 handeln. Gemäß diesem Ausführungsbeispiel weist die Schiebereinheit 120 eine Aufnahmeeinheit 300 auf, die dazu ausgebildet ist, um den Seilzug 155 aufzunehmen.

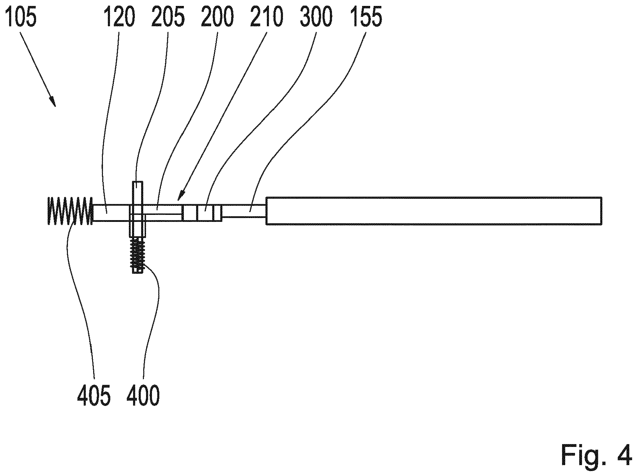

Figur 4 zeigt eine seitliche Querschnittdarstellung einer Entsperrvorrichtung 105 gemäß einem Ausführungsbeispiel. Dabei kann es sich um die anhand von Fig. 3 beschriebene Entsperrvorrichtung 105 handeln.

Zu erkennen ist in Fig. 4, dass die Exzenterachseneinrichtung 205 den Abschnitt 200 durchdringt und zu zwei Seiten aus der Ebene des Abschnitts 200 hervorsteht. Die Entsperrvorrichtung 105 weist gemäß diesem Ausführungsbeispiel eine Druckfeder 400 und eine Unterstützungsfeder 405 auf. Die Druckfeder 400 ist um einen Teilabschnitt der Exzenterachseneinrichtung 205 herum verlaufend angeordnet und in der hier dargestellten ersten Position der Exzentereinrichtung entspannt angeordnet. Gemäß diesem Ausführungsbeispiel ist der Abschnitt 200 dazu ausgeformt, um ansprechend auf die Betätigung die Linearbewegung entlang der Exzenterachseneinrichtung 205 in Richtung der Druckfeder 400 auszuführen, um die Druckfeder 400 zu spannen. Die Unterstützungsfeder 405 ist gemäß diesem Ausführungsbeispiel senkrecht zu der Druckfeder 400 angeordnet und übt eine Vorspannung auf die Schiebereinheit 120 aus, solange der Abschnitt 200 in der ersten Position angeordnet ist. Wenn der Abschnitt 200 ansprechend auf die Betätigung die Durchgangsöffnung 210 in Richtung der Druckfeder 400 komplett verlässt, führt die Schiebereinheit 120 gemäß diesem Ausführungsbeispiel angetrieben durch die Unterstützungsfeder 405 eine senkrecht zu der Linearbewegung verlaufende Seitwärtsbewegung aus.

Im Folgenden werden Details der Entsperrvorrichtung 105 noch einmal genauer ausgeführt. Die durch die Entsperrvorrichtung 105 ermöglichte Notentriegelung der Parksperre ist wie folgt realisiert: Der Entriegelungsvorgang wird durch die Übersetzungsfeder 405 unterstützt. Die Federkraft der Übersetzungsfeder 405 ist so dimensioniert, dass sie in der Lage wäre, die Parksperre auszulegen. Der Abschnitt 200 der Exzentereinrichtung ist axial verschiebbar gelagert und wird über die unterhalb angeordnete Druckfeder 400 in Nominalposition gehalten. Zum Entsperren der Parksperre wird in der Position "P" der Abschnitt 200 der Exzentereinrichtung aus der Durchgangsöffnung 210, die auch als Kulissenöffnung bezeichnet werden kann, herausgedrückt und die Schiebereinheit 120 kann sich dann, angetrieben durch die Unterstützungsfeder 405 verschieben. So wird die an der Schiebereinheit 120 angebrachte Parksperre über den Seilzug 155 ausgelegt. Das anschließende Wiedereinlegen der Parksperre erfolgt durch einen Initialisierungslauf der Entsperrvorrichtung 105, der im Werkstattbetrieb, oder bei KI15-wechsel gestartet werden kann. Das Verschieben der Exzenterachseneinrichtung 205 erfolgt durch einen Taster in Form der Betätigungseinrichtung, der akustisch entkoppelt an der Schalteinrichtung, gemäß diesem Ausführungsbeispiel am Gangwahlhebel oder gemäß einem alternativen Ausführungsbeispiel an einer in Fig. 5 gezeigten Adaptereinrichtung angebracht ist. Die Entkopplung wird über einen zu überbrückenden Luftspalt realisiert.

Figur 5 zeigt eine schematische Querschnittdarstellung einer Schalteinrichtung 140 mit einer Entsperrvorrichtung 105 gemäß einem Ausführungsbeispiel. Dabei kann es sich um die anhand von Fig. 1 beschriebene Schalteinrichtung 140 mit einer der anhand einer der Figuren 1 bis 4 beschriebenen Entsperrvorrichtungen 105 handeln. Der Innenraum 500 der Schalteinrichtung 140 ist gemäß diesem Ausführungsbeispiel von einer Adaptereinrichtung 502 umschlossen, die einen Adapter 505 und einen Deckel 510 aufweist. Zwischen dem Adapter 505 und dem Deckel 510 sowie im Bereich von Enden des Adapters 505 weist die Schalteinrichtung 140 gemäß diesem Ausführungsbeispiel eine Mehrzahl von Dichtungen 515 auf. Im Bereich der im Bereich der Enden des Adapters 505 angeordneten Dichtungen 515 weist die Adaptereinrichtung 502 gemäß diesem Ausführungsbeispiel zudem eine Mehrzahl von Stehbolzen 520 auf, die als Kundenschnittstellen dienen. Der Gangwahlhebel 145, der auch als Schaltung bezeichnet werden kann, weist gemäß diesem Ausführungsbeispiel eine Ansteuerelektronik 525 auf. Zwischen der Ansteuerelektronik 525 und dem im Innenraum 500 angeordneten Teil der Entsperrvorrichtung 105 ist gemäß diesem Ausführungsbeispiel eine Flex-Folie 530 zur Kontaktierung mit der Entsperrvorrichtung 105 angeordnet, wobei die Flex-Folie 530 hierzu eine Sensorik aufweist. Der Seilzug 155 ist gemäß diesem Ausführungsbeispiel teilweise von einer Ansatzschlauchfassung 535 ummantelt. In einem Bereich, in dem der Seilzug 155 und die Ansatzschlauchfassung 535 den Deckel 510 durchdringen, weist die Schalteinrichtung 140 eine Dichthülle 540 auf, die außerhalb des Deckels 510 an dem Deckel 510 anliegend angeordnet ist und die Ansatzschlauchfassung 535 dichtend umhüllt. Zwischen der Entsperrvorrichtung 105 und dem Deckel 510 sind gemäß diesem Ausführungsbeispiel zwei Dämpfungselemente 545 angeordnet, die dazu ausgebildet sind, um während des Entsperrens der Parksperre eine akustische Entkopplung zu bewirken.

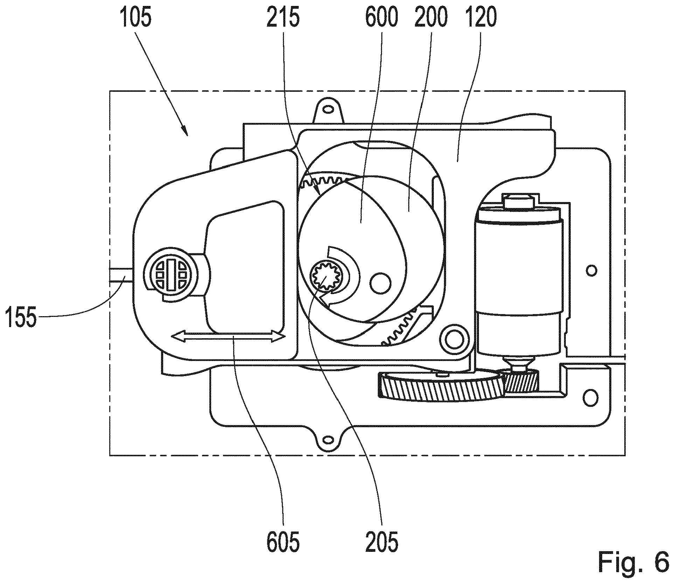

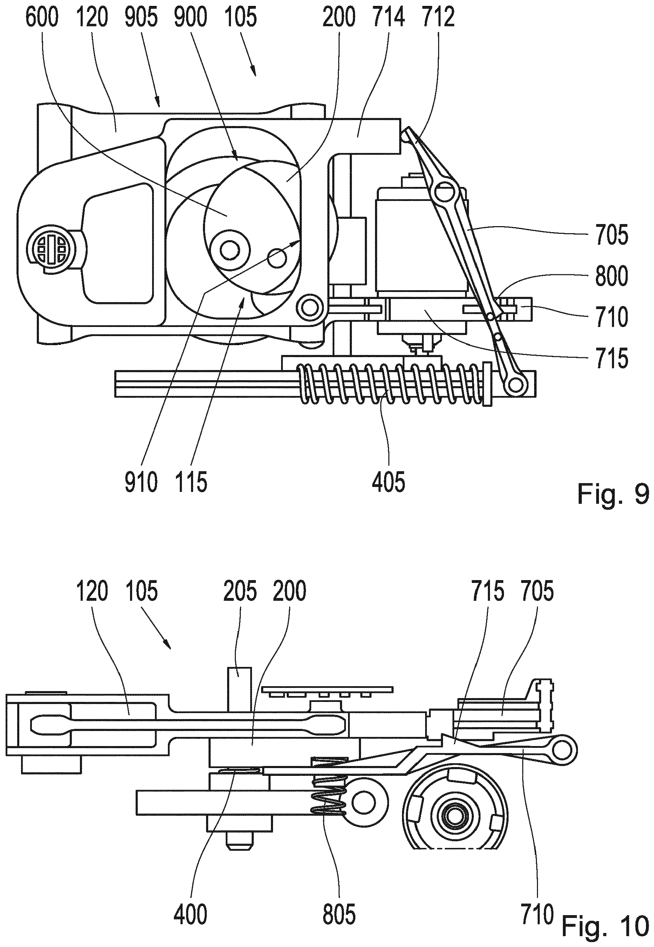

Figur 6 zeigt eine Aufsicht auf eine Entsperrvorrichtung 105 gemäß einem Ausführungsbeispiel. Hierbei kann es sich um die anhand von Fig. 4 beschriebene Entsperrvorrichtung 105 handeln. Gemäß diesem Ausführungsbeispiel weist der Abschnitt 200 der Exzentereinrichtung 115 ein Versatzelement 600 auf, das dazu ausgeformt ist, um ansprechend auf die Linearbewegung der Exzentereinrichtung 115 die senkrecht zu der Linearbewegung verlaufende Seitwärtsbewegung 605 der Schiebereinheit 120 zu begrenzen, wenn die Exzentereinrichtung 115 wie in Fig. 9 dargestellt, die Linearbewegung ausgeführt hat und in der zweiten Position angeordnet ist. Hierzu formt das Versatzelement 600 eine stufenförmige Erhöhung des Abschnitts 200 aus.

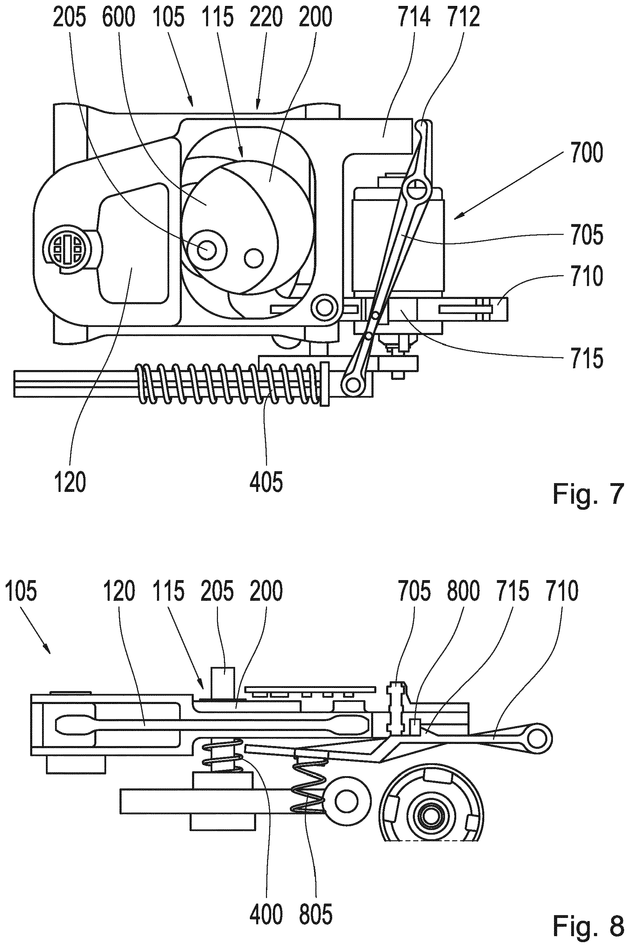

Figur 7 zeigt eine Aufsicht auf eine Entsperrvorrichtung 105 gemäß einem Ausführungsbeispiel. Hierbei kann es sich um die anhand von Fig. 6 beschriebene Entsperrvorrichtung 105 handeln, mit dem Unterschied, dass die Entsperrvorrichtung 105 gemäß diesem Ausführungsbeispiel eine Übersetzungseinrichtung 700 aufweist, die dazu ausgebildet, ist, um die Schiebereinheit 120 von der Sperrposition 220 in die in Fig. 9 dargestellte Entsperrposition zu übersetzen. Die Übersetzungseinrichtung 700 weist hierzu die Unterstützungsfeder 405 und gemäß diesem Ausführungsbeispiel zusätzlich eine Hebeleinrichtung 705 und eine Hakeneinrichtung 710 auf.

Die Unterstützungsfeder 405 ist gemäß diesem Ausführungsbeispiel angeordnet, um in der Sperrposition 220 der Schiebereinheit 120 eine Vorspannung auf die Hebeleinrichtung 705 der Übersetzungseinrichtung 700 auszuüben, wobei die Unterstützungsfeder 405 angeordnet ist, um ansprechend auf das Bewegen der Exzentereinrichtung 115 in die zweite Position, die Vorspannung freizugeben, um ein Überführen der Schiebereinheit 120 in die Entsperrposition zu ermöglichen.

Die Hebeleinrichtung 705 ist dazu ausgeformt, um ansprechend auf ein Freigeben der Vorspannung der Unterstützungsfeder 405 umgelegt zu werden, um die Schiebereinheit 120 in die Entsperrposition zu schieben. Hierzu weist die Hebeleinrichtung 705 gemäß diesem Ausführungsbeispiel eine Nase 712 auf, die an einem Vorsprung 714 der Schiebereinheit 120 anliegt.

Die Hakeneinrichtung 710 weist zumindest einen Haken 715 auf, der in der hier dargestellten ersten Position der Exzentereinrichtung 115 derart mit der Hebeleinrichtung 705 gekoppelt ist, dass ein Umlegen der Hebeleinrichtung 705 verhindert wird. Die Hakeneinrichtung 710 ist weiterhin angeordnet, um durch das Bewegen der Exzentereinrichtung 115 in die zweite Position durch die Exzentereinrichtung 115 derart ausgelenkt zu werden, dass der Haken 715 die Hebeleinrichtung 705 freigibt und die Hebeleinrichtung 705 angetrieben durch die Unterstützungsfeder 405 umgelegt wird.

Zu sehen ist in Fig. 7 eine Notentriegelung über Versatz. Eine Exzenterwelle der Exzenterachseneinrichtung 205 ist axial verschiebbar gelagert. Beim Entsperren der Parksperre wird die Exzentereinrichtung 115/die Exzenterwelle in ihrer Achsrichtung linear verschoben. Der Abschnitt 200 der Exzentereinrichtung 115 ist zweistufig mit dem Versatzelement 600 ausgeführt. Das Versatzelement 600 dient als Wegbegrenzung der Schiebereinheit 120, welche über die Übersetzungsfeder 405, die auch als Notentriegelungsfeder bezeichnet werden kann und die Hebeleinrichtung 705, die auch als Übersetzungshebel bezeichnet werden kann, betätigt wird.

Figur 8 zeigt eine seitliche Querschnittdarstellung einer Entsperrvorrichtung 105 gemäß einem Ausführungsbeispiel. Hierbei kann es sich um die anhand von Fig. 7 beschriebene Entsperrvorrichtung 105 handeln. Zu erkennen ist in Fig. 8, dass der Haken 715 an einer Fläche 800 der Hebeleinrichtung 705 anliegt und so das Umlegen der Hebeleinrichtung 705 in der ersten Position der Exzentereinrichtung 115 formschlüssig verhindert. Die Hakeneinrichtung 710 weist gemäß diesem Ausführungsbeispiel eine Hakeneinrichtungsfeder 805 auf.

Figur 9 zeigt eine Aufsicht auf eine Entsperrvorrichtung 105 gemäß einem Ausführungsbeispiel. Hierbei kann es sich um die anhand von Fig. 8 beschriebene Entsperrvorrichtung 105 handeln, mit dem Unterschied, dass die Exzentereinrichtung 115 durch die Betätigung in die zweite Position 900 bewegt wurde und die Schiebereinheit 120 daraufhin in die Entsperrposition 905 überführt wurde, wodurch die Parksperre entsperrt ist. Der Haken 715 wurde durch die Linearbewegung des Abschnitts 200 von der Fläche 800 weggedrückt, wodurch die Hebeleinrichtung 705 durch die Übersetzungsfeder 405 umgelegt wurde und mit der Nase 712 durch einen Druck auf den Vorsprung 714 die Schiebereinheit 120 in die Entsperrposition 905 gedrückt hat. In der Entsperrposition 905 hat die Schiebereinheit 120 die Seitwärtsbewegung ausgeführt und liegt nun mit einem Rand 910 der Durchgangsöffnung an einer Seite des Versatzelements 600 an.

Anders ausgedrückt erfolgt ein Antrieb zum Entsperren der Parksperre gemäß diesem Ausführungsbeispiel über die Übersetzungsfeder 405. Hierbei wird die in der vorgespannten Übersetzungsfeder 405 gespeicherte Energie mittels der Hebeleinrichtung 705 auf die Schiebereinheit 120 übertragen. Ein Wiederaufladen der Übersetzungsfeder 405 erfolgt über den Motor, das Getriebe und die Exzentereinrichtung 115 oder über eine weitere Mechanik, z. B. einen externen Hebel.

Figur 10 zeigt eine seitliche Querschnittdarstellung einer Entsperrvorrichtung 105 gemäß einem Ausführungsbeispiel. Hierbei kann es sich um die anhand von Fig. 9 beschriebene Entsperrvorrichtung 105 handeln. Zu erkennen ist in Fig. 10, dass der Abschnitt 200 durch die Linearbewegung die Hakeneinrichtung 710 derart von der Hebeleinrichtung 705 weggedrückt hat, dass der Haken 715 von der Fläche wegbewegt wurde und das Umlegen der Hebeleinrichtung 705 so ermöglicht wurde.

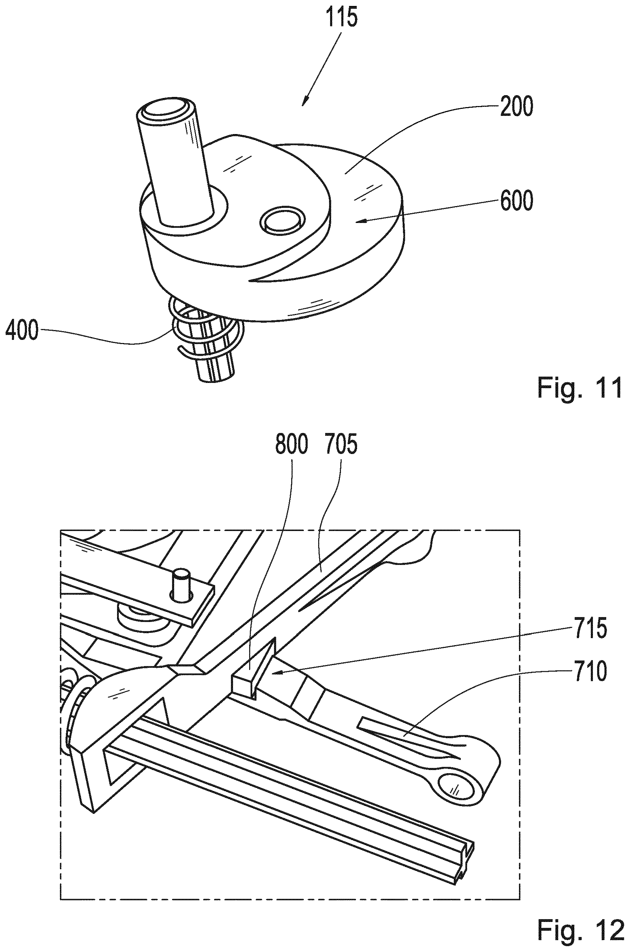

Figur 11 zeigt eine perspektivische Darstellung einer Exzentereinrichtung 115 mit einem Versatzelement 600 gemäß einem Ausführungsbeispiel. Hierbei kann es sich um die anhand von einer der Figuren 6 bis 10 beschriebene Exzentereinrichtung 115 handeln.

Figur 12 zeigt eine perspektivische Aufsicht auf eine Hakeneinrichtung 710 gemäß einem Ausführungsbeispiel. Hierbei kann es sich um die anhand einer der Figuren 7 und 8 beschriebene Hakeneinrichtung 710 handeln, bei der der Haken 715 an der Fläche 800 der Hebeleinrichtung 705 anliegt und somit in der ersten Position der Exzentereinrichtung das Umlegen der Hebeleinrichtung 705 formschlüssig verhindert.

In einem Normalbetrieb, also wenn die Sparksperre nicht durch die Entsperrvorrichtung entsperrt wurde, wird die Notentriegelung wie folgt gesichert:
In einem der Normalbetriebe P R N D wird die Übersetzungsfeder 405 oder die Hebeleinrichtung 705 nach dem Aufladen über einen Sperrmechanismus, z. B. einen mechanisch gesicherter Sperrriegel wie die hier vorgestellte Hakeneinrichtung 710 und/oder einen Sperrhebel über Haftmagnet und/oder einen Sperrmagnet gesichert, wodurch eine dauerhafte Belastung von Motor, Getriebe, Exzentereinrichtung und Schiebereinheit 120 vermieden wird.

In den Betrieben N D wird die Exzentereinrichtung wie folgt gesichert: In Position N und D wird die lineare Bewegung der Exzentereinrichtung/der Exzenterwelle verhindert, um ein ungewolltes Betätigen der Entsperrvorrichtung, z. B. durch Schwingbelastung, zu vermeiden. Eine Lagerung ist dabei in drei Bereiche getrennt: einen Drehmoment-Teil, einen Last-Teil und eine Abdeckung.

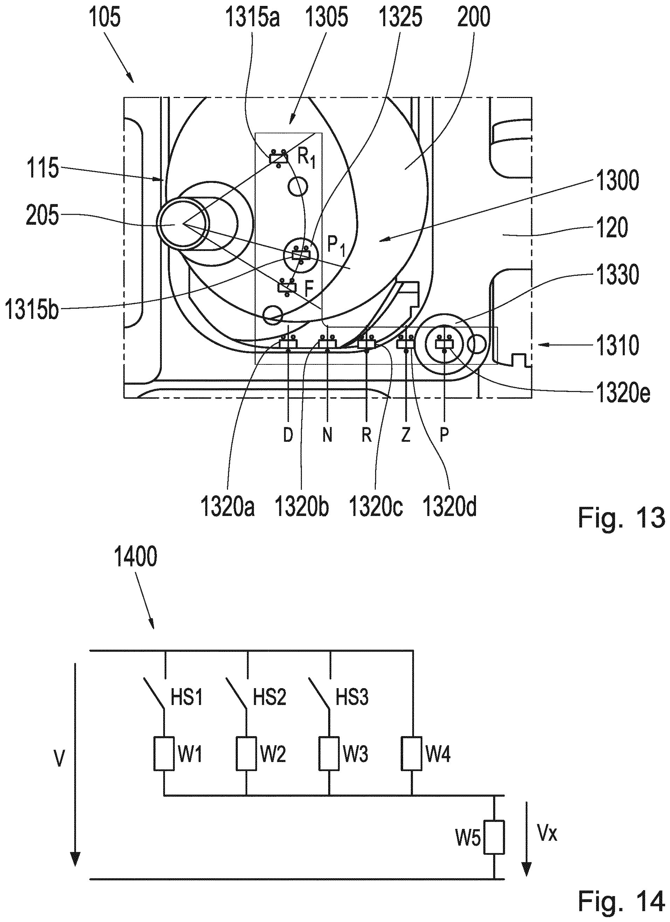

Figur 13 zeigt eine Aufsicht auf eine Entsperrvorrichtung 105 mit einer Sensoreinrichtung 1300 gemäß einem Ausführungsbeispiel. Dabei kann es sich bei der Entsperrvorrichtung 105 um eine der anhand einer der vorangegangenen Figuren beschriebenen Entsperrvorrichtungen 105 handeln. Die Sensoreinrichtung 1300 ist dazu ausgebildet, um zumindest eine in der Schiebereinheit 120 aufgenommene oder im Bereich der Schiebereinheit 120 angeordnete Stellung der Exzentereinrichtung 115 zu erkennen. Gemäß diesem Ausführungsbeispiel ist die Sensoreinrichtung 1300 dazu ausgebildet, um eine Stellung der Exzentereinrichtung 115 zu erkennen, die eine in der zweiten Position angeordnete Exzentereinrichtung 115 repräsentiert, um eine durch die Entsperrvorrichtung 105 entsperrte Parksperre zu erkennen. Gemäß diesem Ausführungsbeispiel jedoch ist die Exzentereinrichtung 115 in der ersten Position angeordnet. Die Sensoreinrichtung 1300 weist eine an der Exzentereinrichtung 115 angeordnete Exzentersensoreinrichtung 1305 und eine an der Schiebereinheit 120 angeordnete Schiebersensoreinrichtung 1310 auf.

Gemäß diesem Ausführungsbeispiel ist die Sensoreinrichtung 1300 zum Erkennen der Stellung dazu ausgebildet, um eine Exzentersensorposition eines Exzentersensors 1315 der Exzentersensoreinrichtung 1305 und eine Schiebersensorposition eines Schiebersensors 1320 der Schiebersensoreinrichtung 1310 zu vergleichen, um die Stellung zu erkennen. Gemäß diesem Ausführungsbeispiel weist die Exzentersensoreinrichtung 1305 eine Mehrzahl von Exzentersensoren 1315a; 1315b auf, die bogenförmig auf dem Abschnitt 200 um die Exzenterachseneinrichtung 205 herum angeordnet sind und die Schiebersensoreinrichtung 1310 weist eine Mehrzahl von Schiebersensoren 1320a; 1320b; 1320c; 1320d; 1320e auf, die linear angeordnet sind. Gemäß diesem Ausführungsbeispiel ist zumindest eine Exzentersensorposition eines Exzentersensors 1315 der Exzentersensoreinrichtung 1305 einer Schiebersensorposition eines Schiebersensors 1320 der Schiebersensoreinrichtung 1310 zugeordnet, wobei die Stellung erkannt wird, wenn die Exzentersensorposition nicht in einem vorgestimmten Verhältnis zu der zugeordneten Schiebersensorposition angeordnet ist. Gemäß diesem Ausführungsbeispiel ist die Exzentersensorposition des Exzentersensors 1315a der Schiebersensorposition des Schiebersensors 1320c zugeordnet, was einer Gangwahlhebeleinstellung des Gangwahlhebels im Gang R entspricht. Gemäß diesem Ausführungsbeispiel ist die Exzentersensorposition des Exzentersensors 1315b der Schiebersensorposition des Schiebersensors 1320e zugeordnet, was einer Gangwahlhebeleinstellung des Gangwahlhebels im Gang P entspricht. Gemäß diesem Ausführungsbeispiel ist eine Exzentersensorposition eines der Exzentersensoren 1315 im Verhältnis zu einer zugeordneten Schiebersensorposition eines der Schiebersensoren 1320 angeordnet, die Stellung wird somit gemäß diesem Ausführungsbeispiel von der Sensoreinrichtung 1300 nicht erkannt.

Gemäß diesem Ausführungsbeispiel sind die Exzentersensoren 1315a; 1315b und die Schiebersensoren 1320a; 1320b; 1320c; 1320d; 1320e; zumindest teilweise als Magnetsensoren ausgeformt. Gemäß einem alternativen Ausführungsbeispiel ist zumindest einer der Exzentersensoren 1315 und/oder einer der Schiebersensoren 1320 zumindest teilweise als ein Magnetsensor ausgeformt. Zum Erkennen der zumindest einen zugeordneten Position weist die Exzentersensoreinrichtung 1305 einen Exzentermagneten 1325 und die Schiebersensoreinrichtung 1310 einen Schiebermagneten 1330 auf.

Bei dem hier vorgestellten Sensorkonzept befinden sich bedämpfende Elemente für die Sensorik in Form der Schiebersensoreinrichtung 1310 und der Exzentersensoreinrichtung 1305 sowohl an der Schiebereinheit 120 als auch an der Exzentereinrichtung 115.

Redundanz für Position P und R: Die Notfunktion wird gemäß diesem Ausführungsbeispiel durch die Exzentersensoren 1315 an der Exzentereinrichtung 115 erkannt, wenn kein Signal vorliegt. Die Normalfunktion wird durch die Exzentersensoren 1315/den Sensor R1 an der Exzentereinrichtung 115 erkannt. Eine Feder-Position F ist zum Abschalten des Motors bei einem Vorgang "Feder spannen"

Figur 14 zeigt eine Darstellung einer Verschaltung 1400 von Sensoren gemäß einem Ausführungsbeispiel. Dabei kann es sich um eine Verschaltung 1400 der anhand von Fig. 13 beschriebenen Schiebersensoren und Exzentersensoren handeln.

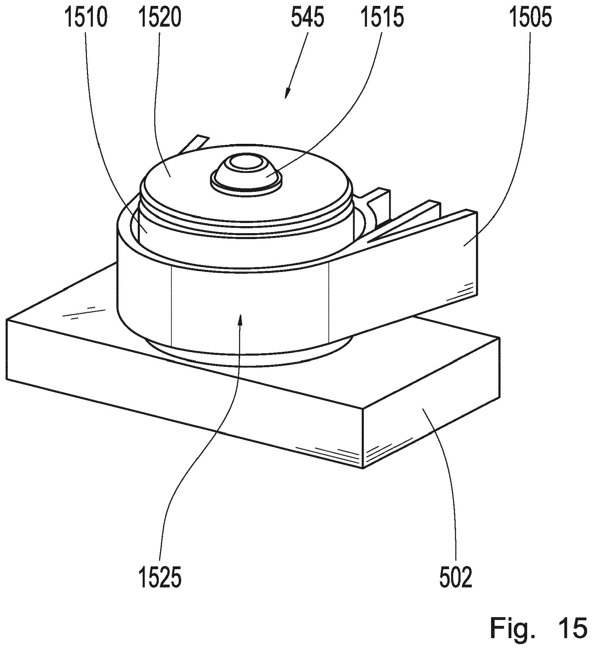

Figur 15 zeigt eine perspektivische Ansicht eines Dämpfungselements 545 gemäß einem Ausführungsbeispiel. Dabei kann es sich um das in Fig. 5 beschriebene Dämpfungselement 545 handeln. Das Dämpfungselement 545 ist dazu ausgebildet, um beim Entsperren der Parksperre zumindest ein Geräusch der anhand einer der Figuren 1 bis 10 oder 13 beschriebenen Entsperrvorrichtungen akustisch zu dämpfen. Das Dämpfungselement 545 ist gemäß diesem Ausführungsbeispiel Teil der Entsperrvorrichtung und zwischen einem Gehäuse 1505 der Entsperrvorrichtung und der Adaptereinrichtung 502 der in Fig. 5 beschriebenen Schalteinrichtung angeordnet. Das Dämpfungselement 545 weist gemäß diesem Ausführungsbeispiel einen Dämpfkörper 1510 mit einer Öffnung, eine selbstschneidende Schraube 1515 und eine Unterlegscheibe 1520 auf.

Die Öffnung nimmt einen Dom 1525 der Adaptereinrichtung 502 auf. Die selbstschneidende Schraube 1515 ist in den Dom 1525 der Adaptereinrichtung 502 eingeschraubt, um das Gehäuse 1505 der Entsperrvorrichtung an der Adaptereinrichtung 502 zu fixieren. Gemäß diesem Ausführungsbeispiel ist das Dämpfungselement 545 in einem ringförmigen Gehäuseabschnitt des Gehäuses 1505 aufgenommen.

Das Dämpfungselement 545 ermöglicht eine akustische Kapselung unter einem Bodenblech im Modul. Die Entsperrvorrichtung befindet sich unterhalb des Bodenblechs in der Adaptereinrichtung 502 und wird akustisch entkoppelt, um eine Geräuschbildung zu vermeiden. Die Entkopplung erfolgt über das oder eine Mehrzahl von Dämpfungselementen 545, welche zwischen der Entsperrvorrichtung und der Adaptereinrichtung 502 eine Schwingungsübertragung vermeiden. Anders als bei bekannten Entsperrvorrichtungen kommt bei dem hier vorgestellten Dämpfungselement 545 vorteilhafterweise eine selbstschneidende Schraube 1515 für Kunststoff zum Einsatz. Diese wird in einen angespritzten Dom 1525 geschraubt, der sich an der Adaptereinrichtung 502 befindet, die mit der Entsperrvorrichtung verschraubt wird.

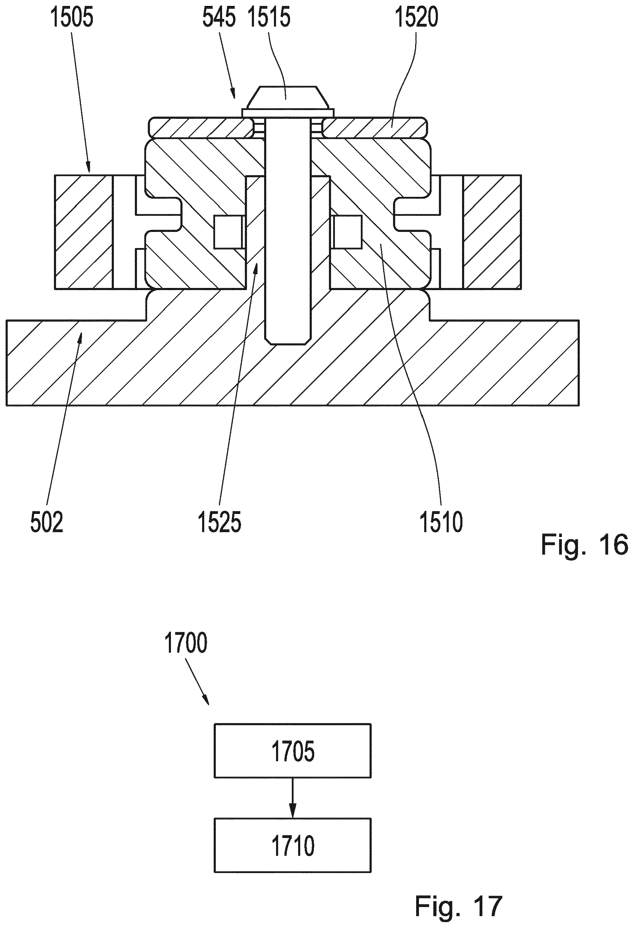

Figur 16 zeigt eine seitliche Querschnittsdarstellung eines Dämpfungselements 545 gemäß einem Ausführungsbeispiel. Dabei kann es sich um das anhand von Fig. 15 beschriebene Dämpfungselement 545 handeln.

Figur 17 zeigt ein Ablaufdiagramm eines Verfahrens 1700 zum Betreiben einer Entsperrvorrichtung gemäß einem Ausführungsbeispiel. Dabei kann es sich um ein Verfahren 1700 zum Betreiben einer der anhand einer der Figuren 1 bis 10 oder 13 beschriebenen Entsperrvorrichtungen handeln. Das Verfahren 1700 weist zumindest einen Schritt 1705 des Bewegens und einen Schritt 1710 des Überführens auf. Im Schritt 1705 des Bewegens wird die Exzentereinrichtung ansprechend auf das Betätigen der Betätigungseinrichtung von der ersten Position in die zweite Position bewegt. Im Schritt 1710 des Übersetzens wird die Schiebereinheit ansprechend auf den Schritt 1705 des Bewegens von der Sperrposition in die Entsperrposition übersetzt, um die Parksperre zu entsperren.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 105: Entsperrvorrichtung
- 110: Parksperre
- 115: Exzentereinrichtung
- 120: Schiebereinheit
- 125: Betätigungseinrichtung
- 127: Rad
- 130: Motor
- 135: Fahrzeuggetriebe
- 140: Schalteinrichtung
- 145: Gangwahlhebel
- 150: Schalteinrichtungsmotor
- 155: Übertragungsmittel, Seilzug
- 200: Abschnitt
- 205: Exzenterachseneinrichtung
- 210: Durchgangsöffnung
- 215: erste Position
- 220: Sperrposition
- 300: Aufnahmeeinheit
- 400: Druckfeder
- 405: Unterstützungsfeder
- 500: Innenraum
- 502: Adaptereinrichtung
- 505: Adapter
- 510: Deckel
- 515: Dichtung
- 520: Stehbolzen
- 525: Ansteuerelektronik
- 530: Flex-Folie
- 535: Ansatzschlauchfassung
- 540: Dichthülle
- 545: Dämpfungselement
- 600: Versatzelement
- 605: Seitwärtsbewegung
- 700: Übersetzungseinrichtung
- 705: Hebeleinrichtung
- 710: Hakeneinrichtung
- 712: Nase
- 714: Vorsprung
- 715: Haken
- 800: Fläche
- 805: Hakeneinrichtungsfeder
- 900: zweite Position
- 905: Entsperrposition
- 910: Rand
- 1300: Sensoreinrichtung
- 1305: Exzentersensoreinrichtung
- 1310: Schiebersensoreinrichtung
- 1315: Exzentersensor
- 1315a: Exzentersensor
- 1315b: Exzentersensor
- 1320: Schiebersensor
- 1320a: Schiebersensor
- 1320b: Schiebersensor
- 1320c: Schiebersensor
- 1320d: Schiebersensor
- 1320e: Schiebersensor
- 1325: Exzentermagnet
- 1330: Schiebermagnet
- 1400: Verschaltung
- 1505: Gehäuse
- 1510: Dämpfkörper
- 1515: selbstschneidende Schraube
- 1520: Unterlegscheibe
- 1525: Dom
- 1700: Verfahren
- 1705: Schritt des Bewegens
- 1710: Schritt des Übersetzens

## Patentansprüche

1. Entsperrvorrichtung (105) zum Entsperren einer Parksperre (110) eines Fahrzeugs (100), wobei die Entsperrvorrichtung (105) zumindest die folgenden Merkmale umfasst:
- eine Exzentereinrichtung (115), die dazu ausgeformt ist, um in einer zumindest teilweise in einer Schiebereinheit (120) aufgenommenen ersten Position (215) die Schiebereinheit (120) in einer Sperrposition (220) zu halten, in der die Parksperre (110) gesperrt oder eingelegt ist und in einer zweiten Position (900) ein Übersetzen der Schiebereinheit (120) in eine Entsperrposition (905) zu ermöglichen, in der die Parksperre (110) entsperrt oder ausgelegt ist;
- die Schiebereinheit (120), die über ein Übertragungsmittel (155) mit der Parksperre (110) gekoppelt oder koppelbar ist, wobei die Schiebereinheit (120) dazu ausgeformt ist, um in der Sperrposition (220) das Übertagungsmittel (155) in einer Parksperrposition zu positionieren, um die Parksperre (110) zu sperren und in der Entsperrposition (905) das Übertragungsmittel (155) in einer Parkentsperrposition zu positionieren, um die Parksperre (110) zu entsperren; und
- eine Betätigungseinrichtung (125), die dazu ausgebildet ist, um ansprechend auf eine Betätigung der Betätigungseinrichtung (125) die Exzentereinrichtung (115) von der ersten Position (215) in die zweite Position (900) zu bewegen
**dadurch gekennzeichnet, dass** bei der Entsperrvorrichtung ein in die Schiebereinheit (120) aufgenommener Abschnitt (200) der Exzentereinrichtung (115) dazu ausgeformt ist, um ansprechend auf die Betätigung der Betätigungseinrichtung (125) eine Linearbewegung entlang einer Exzenterachseneinrichtung (205) der Exzentereinrichtung (115), die sich senkrecht zu einer Ebene des Abschnitts (200) erstreckt, auszuführen.

2. Entsperrvorrichtung (105) gemäß Anspruch 1, bei der der Abschnitt (200) der Exzentereinrichtung (115) ein Versatzelement (600) aufweist, das dazu ausgeformt ist, um ansprechend auf die Linearbewegung der Exzentereinrichtung (115) eine senkrecht zu der Linearbewegung verlaufende Seitwärtsbewegung (605) der Schiebereinheit (120) zu begrenzen.

3. Entsperrvorrichtung (105) gemäß einem der vorangegangenen Ansprüche, bei der die Exzentereinrichtung (115) zumindest eine Druckfeder (400) aufweist, die in der ersten Position (215) der Exzentereinrichtung (115) entspannt ist und die angeordnet ist, um ansprechend auf die Betätigung durch zumindest eine Komponente der Exzentereinrichtung (115) gespannt zu werden.

4. Entsperrvorrichtung (105) gemäß einem der vorangegangenen Ansprüche, mit einer Übersetzungseinrichtung (700), die dazu ausgebildet, ist, um die Schiebereinheit (120) von der Sperrposition (220) in die Entsperrposition (905) zu übersetzen, wobei die Übersetzungseinrichtung (700) zumindest eine Unterstützungsfeder (405) aufweist, die angeordnet ist, um in der Sperrposition (220) der Schiebereinheit (120) eine Vorspannung auf die Schiebereinheit (120) und/oder eine Hebeleinrichtung (712) der Übersetzungseinrichtung (700) auszuüben, wobei die Unterstützungsfeder (405) angeordnet ist, um ansprechend auf das Bewegen der Exzentereinrichtung (115) in die zweite Position (900), die Vorspannung freizugeben, um ein Überführen der Schiebereinheit (120) in die Entsperrposition (905) zu ermöglichen.

5. Entsperrvorrichtung (105) gemäß Anspruch 4, bei der die Übersetzungseinrichtung (700) zumindest die Hebeleinrichtung (712) aufweist, die dazu ausgeformt ist, um ansprechend auf ein Freigeben der Vorspannung der Unterstützungsfeder (405) umgelegt zu werden, um die Schiebereinheit (120) in die Entsperrposition (905) zu schieben.

6. Entsperrvorrichtung (105) gemäß einem der Ansprüche 4 oder 5, bei der die Übersetzungseinrichtung (700) zumindest eine Hakeneinrichtung (710) mit zumindest einem Haken (715) aufweist, der in der ersten Position (215) der Exzentereinrichtung (115) derart mit der Hebeleinrichtung (712) gekoppelt ist, dass ein Umlegen der Hebeleinrichtung (712) verhindert wird, wobei die Hakeneinrichtung (710) angeordnet ist, um durch das Bewegen der Exzentereinrichtung (115) in die zweite Position (900) durch die Exzentereinrichtung (115) derart ausgelenkt zu werden, dass der Haken (715) die Hebeleinrichtung (712) freigibt und die Hebeleinrichtung (712) angetrieben durch die Unterstützungsfeder (405) umgelegt wird.

7. Entsperrvorrichtung (105) gemäß einem der vorangegangenen Ansprüche, mit einer Sensoreinrichtung (1300), die zumindest eine an der Exzentereinrichtung (115) angeordnete Exzentersensoreinrichtung (1305) und/oder eine an der Schiebereinheit (120) angeordnete Schiebersensoreinrichtung (1310) aufweist, wobei die Sensoreinrichtung (1300) dazu ausgebildet ist, um zumindest eine in der Schiebereinheit (120) aufgenommene oder im Bereich der Schiebereinheit (120) angeordnete Stellung der Exzentereinrichtung (115) zu erkennen.

8. Entsperrvorrichtung (105) gemäß Anspruch 7, bei der die Sensoreinrichtung (1300) dazu ausgebildet ist, um eine Exzentersensorposition eines Exzentersensors (1315) der Exzentersensoreinrichtung (1305) und/oder eine Schiebersensorposition eines Schiebersensors (1320) der Schiebersensoreinrichtung (1310) zu vergleichen, um die Stellung zu erkennen.

9. Entsperrvorrichtung (105) gemäß einem der Ansprüche 7 bis 8, bei der die Exzentersensoreinrichtung (1305) eine Mehrzahl von Exzentersensoren (1315) aufweist, die bogenförmig angeordnet sind und/oder die Schiebersensoreinrichtung (1310) eine Mehrzahl von Schiebersensoren (1320) aufweist, die linear angeordnet sind.

10. Entsperrvorrichtung (105) gemäß einem der Ansprüche 7 bis 9, bei der zumindest eine Exzentersensorposition eines Exzentersensors (1315) der Exzentersensoreinrichtung (1305) einer Schiebersensorposition eines Schiebersensors (1320) der Schiebersensoreinrichtung (1310) zugeordnet ist, insbesondere wobei die Stellung erkannt wird, wenn die Exzentersensorposition nicht in einem vorgestimmten Verhältnis zu der zugeordneten Schiebersensorposition angeordnet ist.

11. Entsperrvorrichtung (105) gemäß einem der Ansprüche 7 bis 10, bei der zumindest ein Exzentersensor (1315) der Exzentersensoreinrichtung (1305) und/oder ein Schiebersensor (1320) der Schiebersensoreinrichtung (1310) zumindest teilweise als ein Magnetsensor ausgeformt ist.

12. Entsperrvorrichtung (105) gemäß einem der vorangegangenen Ansprüche, mit zumindest einem Dämpfungselement (545), das dazu ausgebildet ist, um beim Entsperren der Parksperre (110) zumindest ein Geräusch der Entsperrvorrichtung (105) akustisch zu dämpfen, wobei das Dämpfungselement (545) zumindest eine Öffnung aufweist, die dazu ausgeformt ist, um einen Dom (1525) einer Adaptereinrichtung (502) aufzunehmen, wobei das Dämpfungselement (545) zumindest eine selbstschneidende Schraube (1515) aufweist, die dazu ausgeformt ist, um in den Dom (1525) der Adaptereinrichtung (502) eingeschraubt zu werden, um die Entsperrvorrichtung (105) an der Adaptereinrichtung (502) zu fixieren, wenn das Dämpfungselement (545) von dem Dom (1525) aufgenommen ist.

13. Verfahren (1700) zum Betreiben einer Entsperrvorrichtung (105) gemäß einem der Ansprüche 1 bis 12, wobei das Verfahren (1700) zumindest die folgenden Schritte umfasst:
- Bewegen (1705) der Exzentereinrichtung (115) von der ersten Position (215) in die zweite Position (900) ansprechend auf das Betätigen der Betätigungseinrichtung (125); und
- Übersetzen (1710) der Schiebereinheit (120) von der Sperrposition (220) in die Entsperrposition (905) ansprechend auf den Schritt (1705) des Bewegens, um die Parksperre (110) zu entsperren.

## Claims

1. Unlocking device (105) for unlocking a parking lock (110) of a vehicle (100), wherein the unlocking device (105) comprises at least the following features:
- an eccentric apparatus (115), which is formed in order, in a first position (215) in which it is at least partially received in a slide unit (120), to hold the slide unit (120) in a locking position (220) in which the parking lock (110) is locked or engaged, and, in a second position (900), to permit the slide unit (120) to be transferred into an unlocking position (905) in which the parking lock (110) is unlocked or disengaged;
- the slide unit (120), which is coupled or is couplable via a transmission means (155) to the parking lock (110), wherein the slide unit (120) is formed in order, in the locking position (220), to position the transmission means (155) in a parking locking position in order to lock the parking lock (110) and, in the unlocking position (905), to position the transmission means (155) in a parking unlocking position in order to unlock the parking lock (110); and
- an actuating apparatus (125), which is designed in order to move the eccentric apparatus (115) from the first position (215) into the second position (900) in response to an actuation of the actuating apparatus (125),
**characterized in that**, in the unlocking device, a section (200) of the eccentric apparatus (115) which is received into the slide unit (120) is formed in order, in response to the actuation of the actuating apparatus (125), to carry out a linear movement along an eccentric axis apparatus (205) of the eccentric apparatus (115), which eccentric axis apparatus extends perpendicularly to a plane of the section (200).

2. Unlocking device (105) according to Claim 1, in which the section (200) of the eccentric apparatus (115) has an offset element (600), which is formed in order, in response to the linear movement of the eccentric apparatus (115), to limit a sideways movement (605) of the slide unit (120), the sideways movement running perpendicularly to the linear movement.

3. Unlocking device (105) according to either of the preceding claims, in which the eccentric apparatus (115) has at least one compression spring (400) which is relaxed in the first position (215) of the eccentric apparatus (115) and which is arranged in order, in response to the actuation, to be tensioned by at least one component of the eccentric apparatus (115).

4. Unlocking device (105) according to one of the preceding claims, with a transfer apparatus (700) which is designed in order to transfer the slide unit (120) from the locking position (220) into the unlocking position (905), wherein the transfer apparatus (700) has at least one support spring (405) which is arranged in order, in the locking position (220) of the slide unit (120), to exert a pretensioning on the slide unit (120) and/or on a lever apparatus (712) of the transfer apparatus (700), wherein the support spring (405) is arranged in order, in response to the movement of the eccentric apparatus (115) into the second position (900), to release the pretensioning, in order to permit the slide unit (120) to be transferred into the unlocking position (905).

5. Unlocking device (105) according to Claim 4, in which the transfer apparatus (700) has at least the lever apparatus (712), which is formed in order, in response to a release of the pretensioning of the support spring (405), to be turned in order to push the slide unit (120) into the unlocking position (905).

6. Unlocking device (105) according to either of Claims 4 and 5, in which the transfer apparatus (700) has at least one hook apparatus (710) with at least one hook (715) which, in the first position (215) of the eccentric apparatus (115), is coupled to the lever apparatus (712) in such a manner that turning of the lever apparatus (712) is prevented, wherein the hook apparatus (710) is arranged in order, by means of the movement of the eccentric apparatus (115) into the second position (900), to be deflected by the eccentric apparatus (115) in such a manner that the hook (715) releases the lever apparatus (712) and the lever apparatus (712) is turned in a manner driven by the support spring (405).

7. Unlocking device (105) according to one of the preceding claims, with a sensor apparatus (1300) which has at least one eccentric sensor apparatus (1305) arranged on the eccentric apparatus (115), and/or a slide sensor apparatus (1310) arranged on the slide unit (120), wherein the sensor apparatus (1300) is designed in order to identify at least one position of the eccentric apparatus (115), which position is taken up in the slide unit (120) or is arranged in the region of the slide unit (120) .

8. Unlocking device (105) according to Claim 7, in which the sensor apparatus (1300) is designed in order to compare an eccentric sensor position of an eccentric sensor (1315) of the eccentric sensor apparatus (1305) and/or a slide sensor position of a slide sensor (1320) of the slide sensor apparatus (1310) in order to identify the position.

9. Unlocking device (105) according to either of Claims 7 and 8, in which the eccentric sensor apparatus (1305) has a plurality of eccentric sensors (1315) which are arranged in a curved manner, and/or the slide sensor apparatus (1310) has a plurality of slide sensors (1320) which are arranged linearly.

10. Unlocking device (105) according to one of Claims 7 to 9, in which at least one eccentric sensor position of an eccentric sensor (1315) of the eccentric sensor apparatus (1305) is assigned to a slide sensor position of a slide sensor (1320) of the slide sensor apparatus (1310), in particular wherein the position is identified when the eccentric sensor position is not arranged in a predetermined relationship with respect to the assigned slide sensor position.

11. Unlocking device (105) according to one of Claims 7 to 10, in which at least one eccentric sensor (1315) of the eccentric sensor apparatus (1305) and/or a slide sensor (1320) of the slide sensor apparatus (1310) is at least partially formed as a magnetic sensor.

12. Unlocking device (105) according to one of the preceding claims, with at least one damping element (545) which is designed in order, during the unlocking of the parking lock (110), to acoustically damp at least a noise of the unlocking device (105), wherein the damping element (545) has at least one opening which is formed in order to receive a dome (1525) of an adapter apparatus (502), wherein the damping element (545) has at least one self-cutting screw (1515) which is formed in order to be screwed into the dome (1525) of the adapter apparatus (502) in order to fix the unlocking device (105) to the adapter apparatus (502) when the damping element (545) is received by the dome (1525).

13. Method (1700) for operating an unlocking device (105) according to one of Claims 1 to 12, wherein the method (1700) comprises at least the following steps:
- moving (1705) the eccentric apparatus (115) from the first position (215) into the second position (900) in response to the actuation of the actuating apparatus (125); and
- transferring (1710) the slide unit (120) from the locking position (220) into the unlocking position (905) in response to the movement step (1705), in order to unlock the parking lock (110) .

## Revendications

1. Dispositif de déverrouillage (105) permettant de déverrouiller un frein de stationnement (110) d'un véhicule (100), le dispositif de déverrouillage (105) comprenant au moins les caractéristiques suivantes :
- un dispositif excentré (115) réalisé pour maintenir, dans une première position (215) logée au moins en partie dans une unité de coulisseau (120), l'unité de coulisseau (120) dans une position de verrouillage (220) dans laquelle le frein de stationnement (110) est verrouillé ou engagé et pour permettre dans une deuxième position (900) une démultiplication de l'unité de coulisseau (120) dans une position de déverrouillage (905) dans laquelle le frein de stationnement (110) est débloqué ou désengagé ;
- l'unité de coulisseau (120) qui est couplée ou peut être couplée au frein de stationnement (110) via un moyen de transmission (155), l'unité de coulisseau (120) étant réalisée pour positionner, dans la position de verrouillage (220), le moyen de transmission (155) dans une position de verrouillage de stationnement, de façon à verrouiller le frein de stationnement (110) et à déverrouiller dans la position de déverrouillage (905) le moyen de transmission (155) dans une position de verrouillage de stationnement pour déverrouiller le frein de stationnement (110) ; et
- un dispositif d'actionnement (125) qui est réalisé pour déplacer, en réaction à un actionnement du dispositif d'actionnement (125), le dispositif excentré (115) de la première position (215) jusque dans la deuxième position (900) ;
**caractérisé en ce que** dans le dispositif de déverrouillage, une section (200) du dispositif excentré (115) logée dans l'unité de coulisseau (120) est réalisée pour exécuter, en réaction à l'actionnement du dispositif d'actionnement (125), un mouvement linéaire le long d'un dispositif d'axe excentré (205) du dispositif excentré (115) s'étendant perpendiculairement à un plan de la section (200).

2. Dispositif de déverrouillage (105) selon la revendication 1, dans lequel la section (200) du dispositif excentré (115) comporte un élément décalé (600) réalisé pour limiter, en réaction au mouvement linéaire du dispositif excentré (115), un mouvement latéral (605), s'étendant perpendiculairement au mouvement linéaire, de l'unité de coulisseau (120).

3. Dispositif de déverrouillage (105) selon l'une quelconque des revendications précédentes, dans lequel le dispositif excentré (115) comporte au moins un ressort de pression (400) desserré dans la première position (215) du dispositif excentré (115) et disposé pour être tendu en réaction à l'actionnement d'au moins un composant du dispositif excentré (115).

4. Dispositif de déverrouillage (105) selon l'une quelconque des revendications précédentes, avec un dispositif de démultiplication (700) réalisé pour démultiplier l'unité de coulisseau (120) de la position de verrouillage (220) jusque dans la position de déverrouillage (905), le dispositif de démultiplication (700) comportant au moins un ressort de soutien (405) disposé pour exercer, dans la position de verrouillage (220) de l'unité de coulisseau (120), une précontrainte sur l'unité de coulisseau (120) et/ou un dispositif de levier (712) du dispositif de démultiplication (700), le ressort de soutien (405) étant disposé pour libérer la précontrainte, en réaction au déplacement du dispositif excentré (115) dans la deuxième position (900), pour permettre un passage de l'unité de coulisseau (120) dans la position de déverrouillage (905) .

5. Dispositif de déverrouillage (105) selon la revendication 4, dans lequel le dispositif de démultiplication (700) comporte au moins le dispositif de levier (712) réalisé pour s'incliner, en réaction à une libération de la précontrainte du ressort de soutien (405), de façon à pousser l'unité de coulisseau (120) dans la position de déverrouillage (905).

6. Dispositif de déverrouillage (105) selon l'une quelconque des revendications 4 ou 5, dans lequel le dispositif de démultiplication (700) comporte au moins un dispositif de crochetage (710) avec au moins un crochet (715) qui est couplé de telle sorte dans la première position (215) du dispositif excentré (115) avec le dispositif de levier (712) qu'une inclinaison du dispositif de levier (712) est entravée, le dispositif de crochetage (710) étant disposé pour être défléchi de telle sorte, par le déplacement du dispositif excentré (115), dans la deuxième position (900) par le dispositif excentré (115) que le crochet (715) libère le dispositif de levier (712) et incline le dispositif de levier (712) entraîné par le ressort de soutien (405) .

7. Dispositif de déverrouillage (105) selon l'une quelconque des revendications précédentes, avec un dispositif de détection (1300) qui comporte au moins un dispositif de capteur d'excentre (1305) disposé au niveau du dispositif excentré (115) et/ou un dispositif de détection de coulisseau (1310) disposé au niveau de l'unité de coulisseau (120), le dispositif de détection (1300) étant réalisé pour identifier au moins une position du dispositif excentré (115) logée dans l'unité de coulisseau (120) ou disposée dans la zone de l'unité de coulisseau (120).

8. Dispositif de déverrouillage (105) selon la revendication 7, dans lequel le dispositif de détection (1300) est réalisé pour comparer une position de capteur d'excentre d'un capteur d'excentre (1315) du dispositif de capteur d'excentre (1305) et/ou une position de capteur de coulisseau d'un capteur de coulisseau (1320) du dispositif de détection de coulisseau (1310) pour identifier la position.

9. Dispositif de déverrouillage (105) selon l'une quelconque des revendications 7 à 8, dans lequel le dispositif de capteur d'excentre (1305) comporte une pluralité de capteurs d'excentre (1315) disposés en forme d'arc et/ou dans lequel le dispositif de détection de coulisseau (1310) comporte une pluralité de capteurs de coulisseau (1320) disposés de façon linéaire.

10. Dispositif de déverrouillage (105) selon l'une quelconque des revendications 7 à 9, dans lequel au moins une position de capteur d'excentre d'un capteur d'excentre (1315) du dispositif de capteur d'excentre (1305) est associée à une position de capteur de coulisseau d'un capteur de coulisseau (1320) du dispositif de détection de coulisseau (1310), la position étant notamment identifiée lorsque la position de capteur d'excentre n'est pas disposée dans un rapport prédéfini par rapport à la position de capteur de coulisseau associée.

11. Dispositif de déverrouillage (105) selon l'une quelconque des revendications 7 à 10, dans lequel au moins un capteur d'excentre (1315) du dispositif de capteur d'excentre (1305) et/ou un capteur de coulisseau (1320) du dispositif de détection de coulisseau (1310) est réalisé au moins en partie sous la forme d'un capteur magnétique.

12. Dispositif de déverrouillage (105) selon l'une quelconque des revendications précédentes, avec au moins un élément d'amortissement (545) qui est réalisé pour amortir acoustiquement, en cas de déverrouillage du frein de stationnement (110), au moins un bruit du dispositif de déverrouillage (105), l'élément d'amortissement (545) comportant au moins une ouverture réalisée pour loger un dôme (1525) d'un dispositif d'adaptateur (502), l'élément d'amortissement (545) comportant au moins une vis (1515) auto-taraudeuse réalisée pour être vissée dans le dôme (1525) du dispositif d'adaptateur (502), de façon à fixer le dispositif de déverrouillage (105) au dispositif d'adaptateur (502) lorsque l'élément d'amortissement (545) est logé dans le dôme (1525).

13. Procédé (1700) d'utilisation d'un dispositif de déverrouillage (105) selon l'une quelconque des revendications 1 à 12, le procédé (1700) comprenant au moins les étapes suivantes :
- déplacement (1705) du dispositif excentré (115) de la première position (215) jusque dans la deuxième position (900) en réaction à l'actionnement du dispositif d'actionnement (125) ; et
- démultiplication (1710) de l'unité de coulisseau (120) de la position de verrouillage (220) jusque dans la position de déverrouillage (905) en réaction à l'étape (1705) de déplacement visant à débloquer le frein de stationnement (110).
